Europäisches Patentamt

European Patent Office

Office européen des brevets

(11) Publication number: **0 147 239**
**B1**

(12) EUROPEAN PATENT SPECIFICATION

(45) Date of publication of patent specification: **27.12.89**

(51) Int. Cl.⁴: **G 01 G 19/32, G 01 G 23/37**

(21) Application number: **84309140.6**

(22) Date of filing: **28.12.84**

(54) **Combinatorial weighing method and apparatus therefore.**

(30) Priority: **28.12.83 JP 251707/83**

(43) Date of publication of application:
**03.07.85 Bulletin 85/27**

(45) Publication of the grant of the patent:
**27.12.89 Bulletin 89/52**

(84) Designated Contracting States:
**DE FR GB IT**

(56) References cited:
**EP-A-0 016 841**
**DE-A-2 949 195**
**GB-A-2 077 067**
**LU-A- 82 040**
**US-A-4 395 756**

(73) Proprietor: **KABUSHIKI KAISHA ISHIDA KOKI SEISAKUSHO**
**44, Shogoin Sannou-cho Sakyo-ku**
**Kyoto-shi Kyoto 606 (JP)**

(72) Inventor: **Nobutugu, Hideo Shinwa Yamashina**
**Hi-Life 1012**
**7-5, Otowanoda-cho Yamashina-Ku**
**Kyoto-shi Kyoto (JP)**

(74) Representative: **Fane, Christopher Robin King et al**
**HASELTINE LAKE & CO. Hazlitt House 28 Southampton Buildings Chancery Lane London, WC2A 1AT (GB)**

Courier Press, Leamington Spa, England.

## Description

The present invention relates to a combinatorial weighing method and apparatus.

A known type of combinatorial weighing apparatus operates by supplying a plurality of weighing machines with respective quantities of articles to be weighed, combining respective quantity weight values provided by the weighing machines to find an acceptable combination of quantities which have a total combined weight value equal or closest to a preset target weight, and discharging the articles from those weighing machines corresponding to the acceptable combination of quantities, thereby to provide an output batch of weighed articles of a weight equal or closest to the preset target weight.

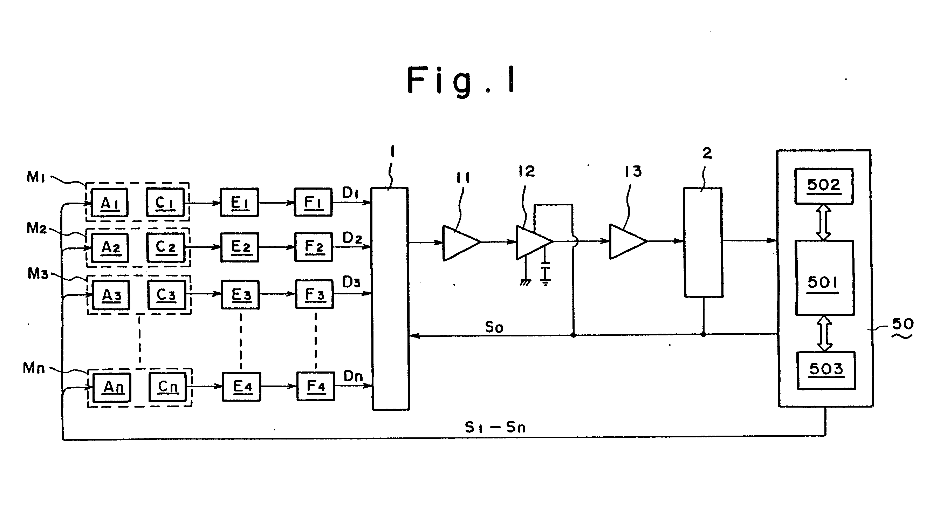

The control system of such a combinatorial weighing apparatus will now be described briefly with reference to Fig. 1 of the accompanying drawings. The apparatus includes $n$ weighing machines $M_1$ through $M_n$ respectively comprising weight sensors $C_1$ through $C_n$, each of which sensors is constituted by, e.g., a load cell, the weighing machines further comprising respective weighing hoppers, not shown, attached to the weight sensors. The weighing hoppers of the weighing machines $M_1$ through $M_n$ are so adapted as to be opened and closed by respective drive units $A_1$ through $A_n$ controlled by combination computing means constituted by a computation controller 50, described below. The weight sensors $C_1$ through $C_n$ sense the weight of articles introduced into the respective weighing hoppers, each weight sensor producing a weight signal, namely an analog value corresponding to the weight sensed thereby. The weight signals from these weight sensors $C_1$ through $C_n$ are applied as multiple input signals $D_1$ through $D_n$ to a multiplexer 1 via amplifier circuits $E_1$ through $E_n$ and filters $F_1$ through $F_n$, respectively. The multiplexer 1, which is composed of analog switches or the like, responds to a selection command $S_o$ from the computation controller 50 by selectively applying the weight signals $D_1$ through $D_n$ as weight data to a buffer circuit 11 in sequential fashion. The buffer circuit 11 delivers the weight data signals $D_1$ through $D_n$ received from the multiplexer 1 to a sample/hold circuit 12 upon subjecting the signal to an impedence conversion. The sample/hold circuit 12 repeatedly samples and holds the weight data signals $D_1$ through $D_n$ subjected to the impedence conversion by the buffer circuit 11 and delivers the weight data signals to a buffer circuit 13. The latter subjects the signals to an impedence conversion, producing analog weight data signals for delivery to an analog-digital converter (A/D converter) 2. The latter converts the analog weight data signals from the buffer circuit 13 into digital signals for application to the computation controller 50. The latter is composed of a microcomputer and includes a processor 501 for performing combinatorial calculations, a read-only memory (ROM) 502 storing a control program for combinatorial processing, and a random-access memory (RAM) 503 for storing the weight data as well as the results of processing performed by the processor 501. The computation controller 50 computes combinations on the basis of the weight data, selects an acceptable combination, sometimes referred to herein as the "optimum" combination, giving a total combined weight value equal or closest to a preset target weight, and delivers discharge commands $S_1$ through $S_n$ to the drive units $A_1$ through $A_n$ of respective weighing hoppers belonging to those weighing machines $M_1$ through $M_n$ which correspond to the selected "optimum" combination.

A combinatorial weighing apparatus of the foregoing type is based on static weighing, i.e. the weighing machines $M_1$ through $M_n$ must attain a quiescent, stabilized state by the time the computation controller 50 reads the weight data $D_1$ through $D_n$ delivered by those weighing machines. Accordingly, in such a known combinatorial weighing apparatus (for example, as disclosed in GB—A—2077067), a timer, set to a time period within which the weighing machines are expected to stabilize, is started at the exact instant the loading of the articles into the weighing hoppers of the weighing machines is completed. When the set time period has expired, the timer issues a signal in response to which the computation controller 50 sends the selection command $S_o$ to the multiplexer 1 and reads the weight data $D_1$—$D_n$ from the weighing machines $M_1$—$M_n$.

To maintain good weighing accuracy, the aforementioned time period must be set with some margin for safety. Even though weighing machines may actually stabilize earlier therefore, the weight data cannot be read until the set time period has fully expired. Accordingly, weighing speed with such a known arrangement is limited by the time period to which the timer has been set and is difficult to raise without diminishing weighing accuracy. Furthermore, with the known weighing system, whether the weighing machines have actually stabilized is not confirmed when the weight data are read. Accordingly, if during the stabilizing period there should be an external disturbance, such as floor vibration, which upsets that stabilization, the weight data may not actually have become stable by the time it is read out by the combination controller 50.

Weighing apparatus employing a single scale, for use in weighing babies, is proposed in DE—A—2949195 and is provided with circuitry for detecting whether or not the scale is in a stable state. The circuitry operates by comparing weight data just received from the scale with one or more stored items of weight data previously received from the scale. If the just-received weight data substantially coincides with the stored weight data, the scale is considered to be in a stable state. DE—A—2949195 is particularly concerned with maintaining a stable digital display of the weight sensed which is not affected by any movement of the baby being weighed. For this reason, when the scale is considered to be stable, a digital display of the apparatus is caused to display the weight value read at the instant stability was determined, until the weighing operation ends. Accordingly, although the apparatus proposed in DE—A—2949195 can avoid the above-mentioned problems which can be caused by employing a timer to determine stability of a weighing machine arbitrarily, that apparatus is not concerned with the problems which can occur if the quiescent state of a weighing machine is subsequently disturbed and, in consequence, does not, and cannot, provide a solution to such problems.

According to one aspect of the present invention there is provided a combinatorial weighing method comprising the step of selecting, on the basis of weight values provided by respective weighing machines holding respective batches of articles to be weighed, an acceptable combination of the said weighing machines holding a total combined weight of articles equal or closest to a preset target weight; the said step being preceded by a process of deciding for each of the said weighing machines whether or not the weight value provided by that machine is to be regarded as acceptably stable, the weight values to be used in the selecting step being then restricted to those regarded as acceptably stable;

characterised in that the said process comprises, for each weighing machine, storing a predetermined number of weight values provided respectively by that machine at successive time instants, reading a latest weight value from the machine concerned at a subsequent instant, deciding on the basis of that latest weight value and the stored values whether or not the weight value of the machine is to be regarded as acceptably stable, updating the stored weight values by storing the latest weight value whilst abandoning an oldest-stored value, and repeating this reading and deciding and updating procedure at successive instants thereafter irrespective of whether or not the weight value of the machine concerned has been regarded as acceptably stable at an earlier one of those instants.

According to another aspect of the present invention there is provided a combinatorial weighing apparatus comprising a plurality of weighing machines for holding respective batches of articles to be weighed and providing respective weight values for the batches, decision means arranged for deciding for each of the said weighing machines whether or not the weight value provided by that machine is to be regarded as acceptably stable, and combination computing means arranged for selecting, on the basis of those weight values, an acceptable combination of the said weighing machines holding a total combined weight of articles equal or closest to a preset target weight; the said decision means being operable to ensure that the weight values to be used by the said combination computing means are restricted to those regarded as acceptably stable;

characterised in that the said decision means are operatively connected to memory means, the said decision means being operable, for each weighing machine to cause a predetermined number of weight values provided respectively by that machine at successive time instants to be stored in the said memory means, and in that the said decision means comprise reading means, connected and arranged for reading, for each weighing machine, a latest weight value from the machine concerned at a subsequent instant, and stability sensing means operable, for each weighing machine, to decide on the basis of that latest weight value and the weight values stored in the said memory means whether or not the weight value of the machine is to be regarded as acceptably stable and to update the stored weight values by causing the latest weight value to be stored in the said memory means whilst abandoning an oldest-stored value, the said reading means and the said stability sensing means being operable to repeat this reading and deciding and updating procedure at successive instants thereafter irrespective of whether or not the weight value of the machine concerned has been regarded as acceptably stable at an earlier one of those instants.

Thus, since the stability of each weighing machine is monitored even after it appears to have reached a stable state, any subsequent disturbance in that stability can be detected and, if necessary, that weighing machine can be excluded from the combinatorial calculations.

In an embodiment of the present invention, each weight value to be used when calculating combinations of weight values in order to select an acceptable combination is a mean weight value calculated from a predetermined number of weight values stored in respect of a weighing machine that has attained a quiescent, stable state. Therefore, in the event that the stability of the machine should happen to be disturbed, for example by floor vibration, during reading by the combination computing means of weight data which are to participate in a combinatorial calculation, any erroneous weighing value provided by a weighing machine as a result of that disturbance will not affect the calculation concerned.

Reference will now be made, by way of example, to the accompanying drawings, in which:

Fig. 1 is a block diagram of a known type of combinatorial weighing apparatus;

Fig. 2 is a block diagram of combinatorial weighing apparatus embodying the present invention;

Fig. 3 is a flowchart illustrating operation of a portion of the apparatus of Fig. 2;

Fig. 4 is a flowchart illustrating operation of a portion of weighing apparatus;

Fig. 5 is a flowchart illustrating the details of a step P3 in the flowchart of Fig. 3; and

Fig. 6 is an example of a data map of memory means shown in Fig. 2.

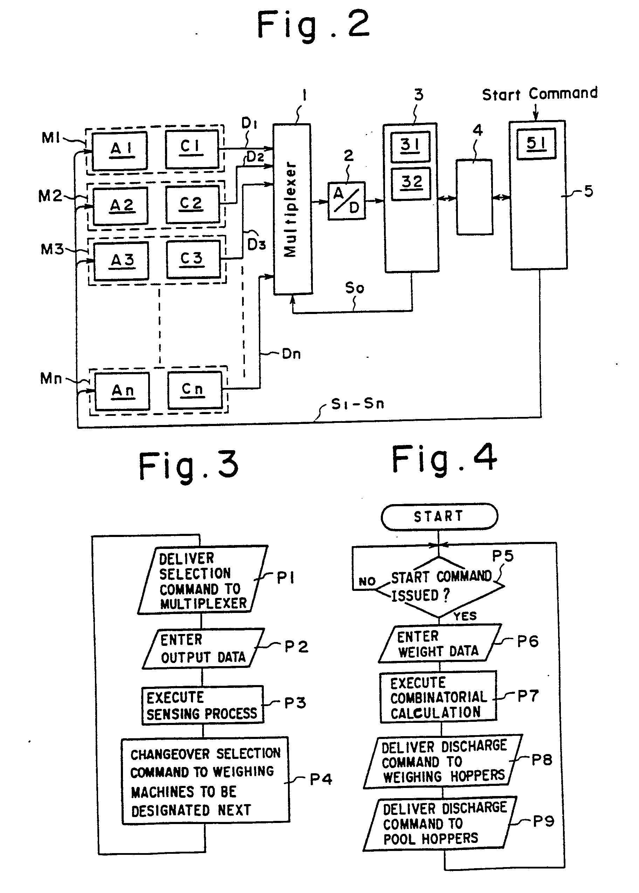

In Fig. 2, portions which are identical to those shown in Fig. 1 are designated by like reference characters. It should be noted that a portion of the control system illustrated in Fig. 1, namely the buffer circuits 11 and 13 and the sample/hold circuit 12, have been omitted from Fig. 2 for simplicity.

The analog weight data $D_1$—$D_n$ produced by the respective weight sensors $C_1$—$C_n$ of the weighing machines $M_1$—$M_n$ are applied consecutively to the A/D converter 2 via the multiplexer 1 and are converted by the A/D converter 2 into digital signals which are in turn applied to decision means, constituted by a computer 3 dedicated to the handling of the weight data. The dedicated computer 3 constantly monitors the weighing state (operating state) of the weighing machines $M_1$—$M_n$ and includes reading means 31 for constantly reading the output data $D_1$—$D_m$ of the weighing machines $M_1$—$M_n$, and stability sensing means 32 for sensing the stability state of each of the weighing machines.

Whenever an item of output data from a weighing machine is stored to update an older value, the sensing means 32 calculates the mean value of a predetermined number of items of the latest output data from that weighing machine over a prescribed period of time and determines whether the weighing machine is stable on the basis of a comparison between a preceding mean value (a mean value of a predetermined number of items of output data obtained before a storing and updating operation) and a current mean value.

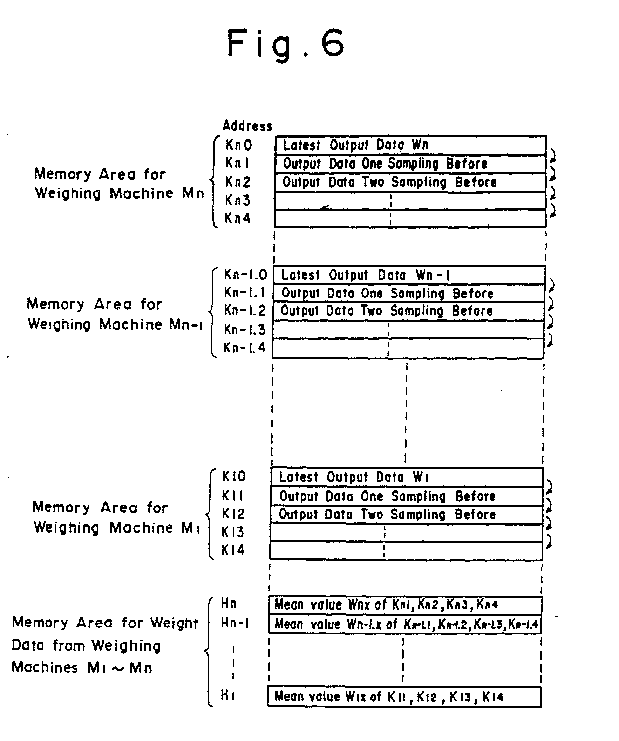

The dedicated computer 3 is connected to memory means 4. As indicated by a data map shown in Fig. 6, the memory means 4 stores, for each and every one of the weighing machines $M_1$—$M_n$, the latest output data $W_1$—$W_n$ produced by the respective weighing machines $M_1$—$M_n$, a predetermined number (four in the illustrated embodiment) of items of output data stored by a plurality of sampling operations over a prescribed period of time, and a mean value (weight data) of the predetermined number of items of output data from each weighing machine. Though the memory means 4 ordinarily is under the supervision of the dedicated computer 3, the arrangement is such that the contents of the memory means 4 may be read at will by a main computer 5, described below, whenever necessary. Adopting such a multiprocessing configuration enables the dedicated computer 3 to monitor the weighing state (operating state) of the weighing machines $M_1$—$M_n$ accurately at all times, and enables the main computer 5 to make prompt use of weight data the reliability whereof is enhanced by the mean-value processing.

The memory means 4 also stores, for each of the weighing machines $M_1$—$M_n$, "provisional stability" flags, which indicate provisional stability of the respective weighing machines $M_1$—$M_n$, and "stability" flags, which indicate complete stability of the respective weighing machines $M_1$—$M_n$.

The main computer 5 controls the overall apparatus and includes arithmetic means 51. When a start command is issued by a packaging machine, not shown, the main computer 5 goes to the memory means 4 to read out the weight data from those weighing machines for which a stability flag has been set up, and the arithmetic means 51 combine these items of weight data to obtain an "optimum" combination thereof, namely a combination giving a total weight equal or closest to a preset target weight. Even if some of the weighing machines are unstable, therefore, the main computer 5 is capable of executing a combinatorial calculation using weight data from any weighing machines which are stable.

The remaining portions of the apparatus of the illustrated embodiment are of the same construction as the above-mentioned known combinatorial weighing apparatus and need not be described in further detail.

The operation of the combinatorial weighing apparatus shown in Fig. 2 will now be described with reference to Fig. 3 which is a flowchart illustrating an example of a basic operating procedure of the dedicated computer 3 for dealing with weight data. Steps P1, P2 and P4 of the flowchart are carried out by the reading means 31, and step P3 is carried out by the sensing means 32.

First, at step P1, the dedicated computer 3 supplies the multiplexer 1 with the selection command $S_0$ designating specific ones of the weighing machines. Next, at step P2, output data from the specific weighing machines (the designated weighing machines) are read following their conversion into digital values by means of the A/D converter 2. The dedicated computer 3 then executes a sensing process, described below, at step P3, upon the completion of which the selection command $S_0$ is changed over at step P4 to those weighing machines to be designated next. The program then returns to step P1, where the changed-over selection command $S_0$ is delivered to the multiplexer 1. The foregoing process steps are repeated so that the dedicated computer 3 may thus read in the weight data from the weighing machines $M_1$—$M_n$ in successive fashion.

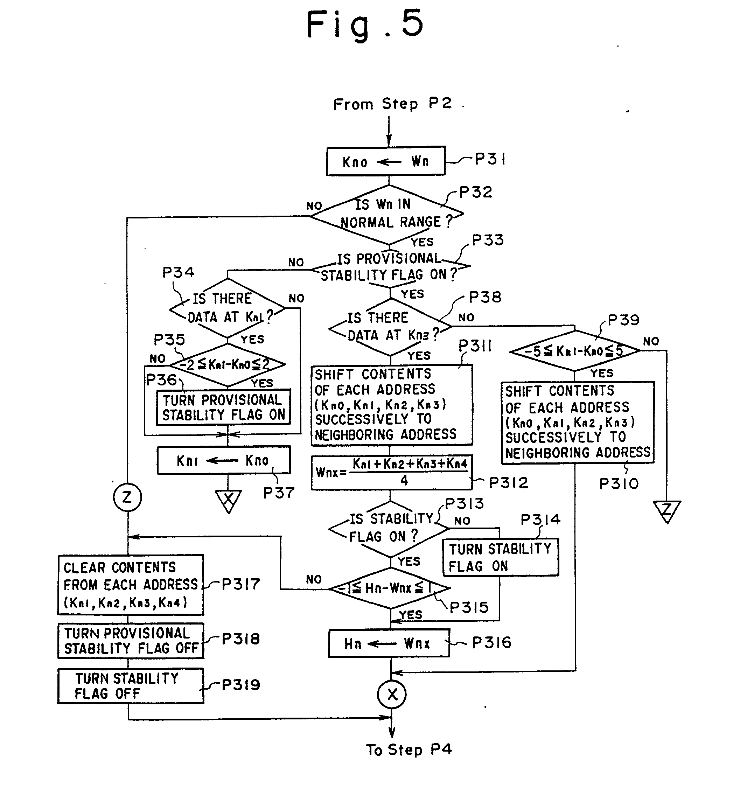

Fig. 5 is a flowchart illustrating the details of step P3 mentioned above. The processing carried out by the sensing means 32 will be described mainly with reference to a single weighing machine $M_n$.

As seen in Fig. 6, which illustrates an example of a data map of the memory means 4, there are assigned to the weighing machine $M_n$ a memory area, which extends from an address $K_{n0}$ to an address $K_{n4}$, for storing the output data of that weighing machine $M_n$, and a memory area $H_n$ for storing a mean value $W_{nx}$, described below.

Referring now to Fig. 5, at a step P31 the dedicated computer 3 stores an item of output data $W_n$ (a digital value), received from the weighing machine $M_n$, in the memory means 4 at the address $K_{n0}$. This is followed by a step P32, at which it is determined whether the data $W_n$ lies within a normal range. The range is a normal range if the item of output data $W_n$ lies between a count corresponding to, say, −5 grams, and a count corresponding to an over-scale reading (e.g., a count corresponding to the target weight plus an allowable upper limit value). An item of output data which falls outside this range is deemed to be abnormal.

If the decision rendered in step P32, is YES, indicating a normal value, then the dedicated computer 3 executes steps from P33 onward. Specifically, when a NO decision indicative of an abnormal item of output data is rendered at step P32, which usually indicates that the weighing hopper of the weighing machine $M_n$ has been detached or that there is an over-scale reading, the data stored at the addresses $K_{n1}$—$K_{n4}$ of the memory means 4 are cleared at a step P317, a provisional stability flag and a stability flag are removed at steps P318, P319, respectively, and the program moves to the step P4.

On the other hand, if the item of output data $W_n$ from the weighing machine $M_n$ is deemed to be normal at the step P32, the dedicated computer 3 determines at a step P33 whether a provisional stability flag has been set up. If it has, i.e. if an ON decision is rendered, the program moves to a step P38; if it has not, i.e. if an OFF decision is rendered, then the program moves to a step P34.

Under the initial starting conditions, however, the provisional stability flag will be OFF, so that the dedicated computer 3 moves first from the step P33 to the step P34, at which it is determined whether an item of output data is stored at address $K_{n1}$ of the memory means 4. Obviously all of the addresses $K_{n1}$—$K_{n4}$ of the memory means 4 will be clear of data at the beginning of operation, so that the decision at the step P34 will be NO. Initially, therefore, the program moves from the step P34 to a step P37, at which the item of output data stored at address $K_{n0}$ of the memory means 4 is written into the location at address $K_{n1}$. This is followed by moving to the step P4.

Upon execution of the foregoing process steps, the time will again come for processing an item of output data $W_m$ from the weighing machine $M_n$. When this time comes, the item of output data previously read will have been stored at the $K_{n1}$ address of the memory in memory means 4. Therefore, the decision rendered at the step P34 will be YES, so that the program will move to step P35. Here the item of output data previously written into address $K_{n1}$ is compared with an item of output data just read and located at address $K_{n0}$. If the result of the comparison is that the difference ranges between a count of, e.g., $-2$ and $+2$, then a provisional stability flag is set up at a step P36 followed by execution of the process step P37. If the decision at the step P35 is that the difference lies outside the range of $-2$ to $+2$, then the step P36 is bypassed and the step P37 is executed.

When the provisional stability flag is set up, the relevant weighing machine $M_n$ can be regarded as being more or less stable. Therefore, if the main computer 5 reads the item of output data at address $K_{n0}$ or $K_{n1}$ at the instant the provisional stability flag is set up and causes this item of data to participate in a combinatorial calculation, the weighing speed of the overall apparatus can be raised the maximum extent.

After the provisional stability flag has been set up, the time will again come for processing an item of output data $W_m$ from the weighing machine $M_n$. When this time comes, the program moves from the step P33 to a step P38, where it is determined whether an item of output data has been stored at the address $K_{n3}$. Since output data will have been written only up to the address $K_{n1}$ at this time, the decision at the step P38 is NO. This then is followed by a step P39, at which the item of output data stored at address $K_{n1}$ is compared with the item of output data stored at address $K_{n0}$. If the result of the comparison is that the difference between the two values is between a count of, e.g., $-5$ and $+5$, then this may be regarded as indicating that the stable state of the weighing machine $M_n$ is continuing. Therefore, at a step P310, the dedicated computer 3 shifts the contents at the addresses $K_{n0}$ through $K_{n3}$ of the memory means 4 to their immediately neighboring addresses in sequential fashion. More specifically, an item of data at address $K_{n3}$ is shifted to address $K_{n4}$, and an item of data at address $K_{n2}$ is shifted to address $K_{n3}$ sequentially. If the decision at the step P39 is that the difference between the two values is outside the range of counts $-5$ to $+5$, then this is taken as indicating that the quiescent, stable state of the weighing machine $M_n$ has been upset. Consequently, the dedicated computer 3 executes the aforementioned step P317 to clear the contents at all addresses $K_{n1}$—$K_{n4}$ of the memory means 4.

Thus, when it is again time to process the item of output data $W_n$ from the weighing machine $M_n$, the output data are shifted from one address to the neighboring address, so that an item of output data eventually comes to be stored at the address $K_{n3}$. Then, when the time for processing the output data next arrives, the program moves from the step P38 to the step P311, so that the data stored at the addresses $K_{n0}$—$K_{n3}$ are shifted again. In this way items of output data come to be stored at each of the addresses $K_{n1}$—$K_{n4}$ of memory means 4. Next, at a step P312, the dedicated computer 3 obtains the mean value $(W_{nx})$ of the items of output data stored at the addresses $K_{n1}$—$K_{n4}$ of memory means 4 and then, at a step P313, determines whether a stability flag has been set up. Initially, however, the stability flag will be in the OFF state, so that the decision at step P313 will be NO. In consequence, the program moves to a step P314 where the stability flag is set. Thereafter, at a step P316, the aforementioned mean value $W_{nx}$ is stored at the $H_n$ address of the memory area in memory means 4. When the time for processing an item of output data $W_n$ from the weighing machine $M_n$ next arrives, the step P313 is re-executed. Now the stability flag will be ON so that a YES decision is rendered, with the program then moving from the step P313 to a step P315.

At the step P315, the mean value $W_{nx}$ which has just been calculated anew is compared with the previously calculated mean value, namely the mean value stored at address $H_n$. If the difference between the two mean values lies between a count of $-1$ and a count of $+1$, this can be regarded as indicating that the weighing machine $M_n$ is still stable. The dedicated computer 3 therefore takes the mean value $W_{nx}$ just calculated anew and stores it at address $H_n$ of the memory area in memory means 4, thus updating the mean value. This occurs at the step P316. If the decision at the step P315 is that the difference between the two values is outside the count range of $-1$ to $+1$, then this is taken as indicating that the weighing machine $M_n$ is no longer stable. Accordingly, the program moves from the step P315 to the step P317, whereby the dedicated computer 3 clears all of the output data from the addresses $K_{n1}$—$K_{n4}$ of the memory means 4. The program then moves to the step P4 via the steps P318, P319.

The dedicated computer 3 repeats the foregoing processing sequentially for each of the weighing machines $M_1$—$M_n$ to sense the stability of each one, and performs updating by storing the latest mean values $W_{1x}$—$W_{nx}$ for the respective weighing machines $M_1$—$M_n$ when they have attained stability.

Fig. 4 is a flowchart illustrating in general the basic operating procedure of the main computer 5. Step P6 in the flowchart is carried out by the arithmetic means 51.

In the flowchart of Fig. 4, the main computer 5 waits for a start command from a packaging machine (not shown) while repeating a step P5. When the start command is issued, the main computer 5 at the step P6 reads, from the memory means 4, weight data, i.e. the mean value $W_{nx}$, from the weighing machines for which a flag has been set up. Next, at a step P7, the main computer 5 combines these weight data to obtain an "optimum" combination and, at a step P8, delivers a discharge command to the weighing hoppers of those weighing machines belonging to the "optimum" combination. Then, upon passage of a prescribed period of time, a discharge command is delivered to the pool hoppers (not shown) corresponding to these selected weighing machines. This is step P9 of the flowchart. Thus, the weighing machines belonging to the "optimum" combination release their articles into the packaging machine. These weighing machines, now empty, are then resupplied with articles from the corresponding pool hoppers. The program then returns to the step P5, where the main computer 5 stands by for the next start command.

It should be noted that the present invention is not limited to the embodiment described above but can be modified in various ways within the scope of the claims. As an example, in the illustrated embodiment the decision concerning the stability of each weighing machine is rendered by obtaining the mean value of a predetermined number of items of the latest output data and then making a judgment based on a comparison between this mean value and a mean value calculated previously. However, an alternative approach would be to obtain the rate of change in the mean value of the output data and render a decision concerning stability based on this rate of change. Further, in the illustrated embodiment, the mean value of a predetermined number of items of output data is treated as weight data to be read in by the main computer 5. Alternatively, however, a mean value of items of output data that remain following exclusion of maximum and minimum values can be employed as such weight data. Also, in the illustrated embodiment, the arrangement is such that an item of weight data from a weighing machine for which a stability flag has been set up is read out of memory and made to participate in a combinatorial calculation. However, an arrangement is also permissible wherein the latest output data from a weighing machine for which a provisional stability flag has been set up is read out of memory and made to take part in a combinatorial calculation.

## Claims

1. A combinatorial weighing method comprising the step of selecting, on the basis of weight values provided by respective weighing machines (M1 to Mn) holding respective batches of articles to be weighed, an acceptable combination of the said weighing machines (M1 to Mn) holding a total combined weight of articles equal or closest to a preset target weight; the said step being preceded by a process of deciding for each of the said weighing machines (M1 to Mn) whether or not the weight value provided by that machine (M1 to Mn) is to be regarded as acceptably stable, the weight values to be used in the selecting step being then restricted by those regarded as acceptably stable;

characterised in that said process comprises, for each weighing machine (M1 to Mn), storing a predetermined number of weight values provided respectively by that machine (M1 to Mn) at successive time instants, reading a latest weight value from the machine concerned at a subsequent instant, deciding on the basis of that latest weight value and the stored values whether or not the weight value of the machine is to be regarded as acceptably stable, updating the stored weight values by storing the latest weight value whilst abandoning an oldest-stored value, and repeating this reading and deciding and updating procedure at successive instants thereafter irrespective of whether or not the weight value of the machine concerned has been regarded as acceptably stable at an earlier one of those instants.

2. A method as claimed in claim 1, wherein for each weighing machine (M1 to Mn), at each of the said successive instants, the stored weight values are used to calculate a latest mean weight value thereof, which latest mean weight value is then compared with a previously-calculated mean weight value and the result of that comparison is then used as a basis for deciding whether or not the machine concerned is acceptably stable, whereafter the latest mean weight value is stored for use in a subsequent comparison operation.

3. A method as claimed in claim 1 or 2, wherein mean weight values, calculated from the respective stored weight values for those weighing machines (M1 to Mn), which are regarded as acceptably stable, are employed in the step of selecting an acceptable combination.

4. A combinatorial weighing apparatus comprising a plurality of weighing machines (M1 to Mn) for holding respective batches of articles to be weighed and providing respective weight values for the batches, decision means (3) arranged for deciding for each of the said weighing machines (M1 to Mn) whether or not the weight value provided by that machine is to be regarded as acceptably stable, and combination computing means (5) arranged for selecting, on the basis of those weight values, an acceptable combination of the said weighing machines (M1 to Mn) holding a total combined weight of articles equal or closest to a preset target weight; the said decision means (3) being operable to ensure that the weight values to be used by the said combination computing means (5) are restricted to those regarded as acceptably stable;

characterised in that the said decision means (3) are operatively connected to memory means (4), the said decision means (3) being operable, for each weighing machine (M1 to Mn), to cause a predetermined number of weight values provided respectively by that machine at successive time instants to be stored in the said memory means (4), and in that the said decision means (3) comprise reading means (31), connected and arranged for reading, for each weighing machine (M1 to Mn), a latest weight value from the machine concerned at a subsequent instant, and stability sensing means (32) operable, for each weighing machine (M1 to Mn), to decide on the basis of that latest weight value and the weight values stored in the said memory means (4) whether or not the weight value of the machine is to be regarded as acceptably stable and to update the stored weight values by causing the latest weight value to be stored in the said memory means (4) whilst abandoning an oldest-stored value, the said reading means (31) and the said stability sensing means (32) being operable to repeat this reading and deciding and updating procedure at successive instants thereafter irrespective of whether or not the weight value of the machine concerned has been regarded as acceptably stable at an earlier one of those instants.

5. Apparatus as claimed in claim 4, wherein the said stability sensing means (32) are operable for each weighing machine (M1 to Mn), at each of the said successive instants, to use the weight values stored in the said memory means (4) to calculate the latest mean weight value thereof, to compare that latest mean weight value with a previously-calculated mean weight value, to use the result of that comparison as a basis for deciding whether or not the machine concerned is acceptably stable, and to cause the latest mean weight value to be stored in the said memory means (4) for use in a subsequent comparison operation.

6. Apparatus as claimed in claim 4 or 5, wherein the said combination computing means (5) are operable to employ mean weight values, calculated from the respective stored weight values for those weighing machines (M1 to Mn) which are regarded as acceptably stable, when selecting an acceptable combination.

**Patentansprüche**

1. Kombinatorisches Wägeverfahren mit dem Schritt des Auswählens einer akzeptablen Kombination von Wägemaschinen (M1 bis Mn), die ein kombiniertes Artikelgesamtgewicht aufweisen, das einem voreingestellten Zielgewichtswert am nächsten ist oder diesem entspricht, auf der Basis von durch jeweilige Wägemaschinen (M1 bis Mn), die jeweilige Chargen zu wägender Artikel enthalten, gelieferten Gewichtswerten; wobei dem genannten Schritt ein Prozess vorausgeht, in dem für jede der Wägemaschinen (M1 bis Mn) entschieden wird, ob der von dieser Maschine (M1 bis Mn) gelieferte Gewichtswert als hinreichend stabil erachtet werden kann oder nicht, wonach die in dem Auswählschritt zu verwendenden Gewichtswerte auf die als hinreichend stabil erachteten beschränkt werden;

dadurch gekennzeichnet, daß der genannte Prozess für jede Wägemaschine (M1 bis Mn) umfaßt:

—Speichern einer vorbestimmten Anzahl von durch die jeweilige Maschine (M1 bis Mn) zu aufeinanderfolgenden Zeitpunkten gelieferten Gewichtswerten,

—Lesen des neuesten Gewichtswertes der betreffenden Maschine zu einem nachfolgenden Zeitpunkt,

—Entscheiden auf der Basis des neuesten Gewichtswertes und der gespeicherten Werte, ob der Gewichtswert der Maschine als hinreichend stabil zu erachten ist oder nicht,

—Aufdatieren der gespeicherten Gewichtswerte durch Speichern des neuesten Gewichtswertes unter Löschen des ältesten gespeicherten Wertes, und

—Wiederholen des Lese-, Entscheidungs- und Speichervorgangs zu aufeinanderfolgenden Zeitpunkten danach, ohne Rücksicht darauf, ob der Gewichtswert der betreffenden Maschine zu einem früheren Zeitpunkt als hinreichend stabil erachtet wurde oder nicht.

2. Verfahren nach Anspruch 1, bei dem zu jedem der aufeinanderfolgenden Zeitpunkte für jede Wägemaschine (M1 bis Mn) die gespeicherten Gewichtswerte zum Berechnen eines neuesten Durchschnittsgewichtswertes verwendet werden, der danach mit einem früher berechneten Durchschnittsgewichtswert verglichen wird und das Ergebnis dieses Vergleiches dann als Basis für die Entscheidung verwendet wird, ob die betreffende Maschine hinreichend stabil ist, woraufhin der neueste Durchschnittsgewichtswert zur Verwendung in einem nachfolgenden Vergleichsvorgang gespeichert wird.

3. Verfahren nach Anspruch 1 oder 2, bei dem Durchschnittsgewichtswerte, die aus den jeweiligen gespeicherten Gewichtswerten für die Maschinen (M1 bis Mn), berechnet werden, die als hinreichend stabil erachtet werden, in dem Schritt des Auswählens einer akzeptablen Kombination verwendet werden.

4. Kombinatorische Wägevorrichtung mit

—mehreren Wägemaschinen (M1 bis Mn) zum Halten jeweiliger Chargen zu wägender Artikel und zum Liefern jeweiliger Gewichtswerte für die Chargen,

—Entscheidungsmitteln (3), die derart angeordnet sind, daß sie für jede der Wägemaschinen (M1 bis Mn) entscheiden, ob der von dieser Maschine gelieferte Gewichtswert als hinreichend stabil angesehen werden soll oder nicht, und

—Kombinationsrechenmitteln (5), die derart angeordnet sind, daß sie auf der Basis dieser Gewichtswerte eine akzeptable Kombination der Wägemaschinen (M1 bis Mn) auswählen, die ein kombiniertes Artikelgesamtgewicht enthalten, das einem voreingestellten Zielgewichtswert gleich oder am nächsten ist; wobei die Entscheidungsmittel (3) derart betreibbar sind, daß sie sicherstellen, daß die von den Kombinationsrechenmitteln (5) zu verwendenden Gewichtswerte auf die als hinreichend stabil erachteten beschränkt sind;

dadurch gekennzeichnet, daß die Entscheidungsmittel (3) betriebsmäßig mit Speichermitteln (4) verbunden sind, wobei die Entscheidungsmittel (3) derart für jede Wägemaschine (M1 bis Mn) betreibbar sind, daß sie das Speichern einer vorbestimmten Anzahl von durch die jeweilige Wägemaschine zu aufeinanderfolgenden Zeitpunkten gelieferten Gewichtswerten in den Speichermitteln (4) veranlaßt, und daß die Entscheidungsmittel (3) Lesemittel (31), die derart verbunden und angeordnet sind, daß sie für jede Wägemaschine (M1 bis Mn) zu einem nachfolgenden Zeitpunkt den neuesten Gewichtswert der betreffenden Maschine lesen, und Stabilitätssensormittel (32) aufweisen, die für jede Wägemaschine (M1 bis Mn) derart betreibbar sind, daß sie auf der Basis des neuesten Gewichtswertes und der in den Speichermitteln (4) gespeicherten Gewichtswerte entscheiden, ob der Gewichtswert der Maschine als hinreichend stabil erachtet werden kann oder nicht, und daß sie die gespeicherten Gewichtswerte aufdatieren, indem sie das Speichern des neuesten Gewichtswertes in den Speichermitteln (4) veranlassen, während der älteste gespeicherte Wert gelöscht wird, wobei die Lesemittel (31) und die Stabilitätssensormittel (32) derart betreibbar sind, daß sie den Lese-, Entscheidungs- und Aufdatierungsvorgang zu aufeinanderfolgenden Zeitpunkten danach wiederholen, ohne Rücksicht darauf, ob der Gewichtswert der betreffenden Maschine zu einem früheren Zeitpunkt als hinreichend stabil erachtet wurde oder nicht.

5. Vorrichtung nach Anspruch 4, bei der die Stabilitätssensormittel (32) für jede Wägemaschine (M1 bis Mn) zu jedem der aufeinanderfolgenden Zeitpunkte derart betreibbar sind, daß sie die in den Speichermitteln (4) gespeicherten Gewichtswerte zum Berechnen eines neuesten Durchschnittsgewichtswertes verwenden, den neuesten Durchschnittsgewichtswert danach mit einem früher berechneten Durchschnittsgewichtswert vergleichen und das Ergebnis dieses Vergleiches dann als Basis für die Entscheidung verwenden, ob die betreffende Maschine hinreichend stabil ist oder nicht, und veranlassen, daß der neueste Durchschnittsgewichtswert zur Verwendung in einem nachfolgenden Vergleichsvorgang in den Speichermitteln (4) gespeichert wird.

6. Vorrichtung nach Anspruch 4 oder 5, bei der die Kombinationsrechenmittel (5) derart betreibbar sind, daß sie beim Auswählen einer akzeptablen Kombination Durchschnittsgewichtswerte verwenden, die aus den für die als hinreichend stabil erachteten Wägemaschinen (M1 bis Mn) gespeicherten Gewichtswerten berechnet werden.

**Revendications**

1. Procédé de pesage combinatoire comportant l'étape de sélection, sur la base de valeurs de poids délivrées par des machines de pesage respectives ($M_1$ à $M_n$) contenant des lots respectifs d'articles à peser, une combinaison acceptable desdites machines de pesage ($M_1$ à $M_n$) contenant un poids combiné total d'articles égal ou très proche d'un poids visé prédéterminé; ladite étape étant précédée par un processus de décision, pour chacune desdites machines de pesage ($M_1$ à $M_n$) du fait que la valeur de poids délivrée par cette machine ($M_1$ à $M_n$) doit être considérée ou non comme raisonnablement stable, les valeurs de poids devant être utilisées dans l'étape de sélection étant ensuite restreintes à celle considérée comme raisonnablement stable;

caractérisé en ce que ledit processus comporte, pour chaque machine de pesage ($M_1$ à $M_n$), la mémorisation d'un nombre prédéterminé de valeurs de poids délivrées respectivement par cette machine ($M_1$ à $M_n$) à des instants successifs, la lecture d'une dernière valeur de poids à partir de la machine concernée à un instant suivant, la décision, sur la base de cette dernière valeur de poids et des valeurs mémorisées, du fait que la valeur de poids de la machine doit être ou non considérée comme raisonnablement stable, la remise à jour des valeurs de poids mémorisées en mémorisant la dernière valeur de poids tout en abandonnant une valeur mémorisée la plus ancienne, et la répétition de cette procédure de lecture et de décision et de remise à jour à des instants successifs par la suite, que la valeur de poids de la machine concernée ait été ou non considérée comme raisonnablement stable à un instant précédent de ces instants.

2. Procédé selon la revendication 1, dans lequel, pour chaque machine de pesage ($M_1$ à $M_n$), à chacun desdits instants successifs, les valeurs de poids mémorisées sont utilisées pour calculer une dernière valeur de poids moyenne de celles-ci, laquelle dernière valeur de poids moyenne est ensuite comparée à une valeur de poids moyenne précédemment calculée et le résultat de cette comparaison est ensuite utilisé comme une base pour décider si oui ou non la machine concernée est raisonnablement stable, après quoi la dernière valeur de poids moyenne est mémorisée pour être utilisée dans une opération de comparaison suivante.

3. Procédé selon la revendication 1 ou 2, dans lequel des valeurs de poids moyennes, calculées à partir des valeurs de poids mémorisées respectives pour les machines de pesage ($M_1$ à $M_n$), qui sont considérées comme raisonnablement stables, sont employées dans l'étape de sélection d'une combinaison acceptable.

4. Appareil de pesage combinatoire comportant une pluralité de machines de pesage ($M_1$ à $M_n$) pour contenir des lots respectifs d'articles à peser et pour délivrer des valeurs de poids respectives pour les lots, des moyens de décision (3) conçus pour décider, pour chacune desdites machines de pesage ($M_1$ à $M_n$), si oui ou non la valeur de poids délivrée par cette machine doit être considérée comme étant raisonnablement stable, et des moyens (5) de calcul de combinaisons conçus pour sélectionner, sur la base de ces valeurs de poids, une combinaison acceptable desdites machines de pesage ($M_1$ à $M_n$) contenant un poids combiné total d'articles égal ou très proche d'un poids visé prédéterminé; lesdits moyens de décision (3) pouvant fonctionner de façon à assurer que les valeurs de poids devant être utilisées par lesdits moyens (5) de calcul de combinaisons sont restreintes à celles considérées comme raisonnablement stables;

caractérisé en ce que lesdits moyens de décision (3) sont connectés de façon opérationnelle aux moyens de mémorisation (4), lesdits moyens de décision (3) pouvant fonctionner, pour chaque machine de pesage ($M_1$ à $M_n$), de façon à provoquer la mémorisation dans lesdits moyens de mémorisation (4) d'un nombre prédéterminé de valeurs de poids délivrées respectivement par cette machine à des instants successifs, et en ce que lesdits moyens de décision (3) comportent des moyens de lecture (31), connectés et conçus pour lire, pour chaque machine de pesage ($M_1$ à

$M_n$), une dernière valeur de poids venant de la machine concernée à un instant suivant, et des moyens de détection de stabilité (32) pouvant fonctionner, pour chaque machine de pesage ($M_1$ à $M_n$), de façon à décider, sur la base de cette dernière valeur de poids et des valeurs de poids mémorisées dans lesdits moyens de mémorisation (4), si oui ou non la valeur de poids de la machine doit être considérée comme étant raisonnablement stable et de façon à remettre à jour les valeurs de poids mémorisées en provoquant la mémorisation dans lesdits moyens de mémorisation (4) de la dernière valeur de poids, tout en abandonnant une valeur la plus anciennement mémorisée, lesdits moyens de lecture (31) et lesdits moyens de détection de stabilité (32) pouvant fonctionner de façon à répéter cette procédure de lecture et de décision et de remise à jour à des instants successifs par la suite, que la valeur de poids de la machine concernée ait été ou non considérée comme raisonnablement stable à un instant précédent de ces instants.

5. Appareil selon la revendication 4, dans lequel lesdits moyens de détection de stabilité (32) peuvent fonctionner, pour chaque machine de pesage ($M_1$ à $M_n$), à chacun desdits instants successifs, de façon à utiliser les valeurs de poids mémorisées dans lesdits moyens de mémorisation (4) afin de calculer la dernière valeur de poids moyenne de celles-ci, de façon à comparer cette dernière valeur de poids moyenne avec une valeur de poids moyenne précédemment calculée, de façon à utiliser le résultat de cette comparaison comme base pour décider si oui ou non la machine concernée est raisonnablement stable, et de façon à provoquer la mémorisation dans lesdits moyens de mémorisation (4) de ladite dernière valeur de poids moyenne pour qu'elle soit utilisée dans une opération de comparaison suivante.

6. Appareil selon la revendication 4 ou 5, dans lequel lesdits moyens de calcul de combinaisons (5) peuvent fonctionner de façon à employer des valeurs de poids moyennes, calculées à partir des valeurs de poids mémorisées respectives pour les machines de pesage ($M_1$ à $M_n$) qui sont considérées comme raisonnablement stables, lors de la sélection de la combinaison acceptable.

Fig. 1

# Fig. 2

# Fig. 3

# Fig. 4

# Fig.5

From Step P2

Kno ← Wn — P31

IS Wn IN NORMAL RANGE ? — P32
NO / YES

IS PROVISIONAL STABILITY FLAG ON ? — P33
NO / YES

IS THERE DATA AT Kn1 ? — P34
NO / YES

$-2 \leq Kn1-Kno \leq 2$ — P35
NO / YES

TURN PROVISIONAL STABILITY FLAG ON — P36

Kn1 ← Kno

Z

X — P37

IS THERE DATA AT Kn3 ? — P38
NO / YES

$-5 \leq Kn1-Kno \leq 5$ — P39
NO / YES

SHIFT CONTENTS OF EACH ADDRESS (Kno,Kn1,Kn2,Kn3) SUCCESSIVELY TO NEIGHBORING ADDRESS — P311

SHIFT CONTENTS OF EACH ADDRESS (Kno,Kn1,Kn2,Kn3) SUCCESSIVELY TO NEIGHBORING ADDRESS — P310

$Wnx = \dfrac{Kn1+Kn2+Kn3+Kn4}{4}$ — P312

Z

IS STABILITY FLAG ON ? — P313
NO / YES

TURN STABILITY FLAG ON — P314

$-1 \leq Hn-Wnx \leq 1$ — P315
NO / YES

CLEAR CONTENTS FROM EACH ADDRESS (Kn1,Kn2,Kn3,Kn4) — P317

TURN PROVISIONAL STABILITY FLAG OFF — P318

TURN STABILITY FLAG OFF — P319

Hn ← Wnx — P316

X

To Step P4

EP 0 147 239 B1

# Fig.6

| Address | |
|---|---|
| Kn0 | Latest Output Data Wn |
| Kn1 | Output Data One Sampling Before |
| Kn2 | Output Data Two Sampling Before |
| Kn3 | |
| Kn4 | |

Memory Area for Weighing Machine Mn

| | |
|---|---|
| Kn-1.0 | Latest Output Data Wn-1 |
| Kn-1.1 | Output Data One Sampling Before |
| Kn-1.2 | Output Data Two Sampling Before |
| Kn-1.3 | |
| Kn-1.4 | |

Memory Area for Weighing Machine Mn-1

| | |
|---|---|
| K10 | Latest Output Data W1 |
| K11 | Output Data One Sampling Before |
| K12 | Output Data Two Sampling Before |
| K13 | |
| K14 | |

Memory Area for Weighing Machine M1

| | |
|---|---|
| Hn | Mean value Wnx of Kn1, Kn2, Kn3, Kn4 |
| Hn-1 | Mean value Wn-1.x of Kn-1.1, Kn-1.2, Kn-1.3, Kn-1.4 |
| | |
| | |
| H1 | Mean value W1x of K11, K12, K13, K14 |

Memory Area for Weight Data from Weighing Machines M1 ~ Mn

4